# EUROPEAN PATENT SPECIFICATION

(11) **EP 2 957 453 B1**
(45) Date of publication and mention of the grant of the patent: **28.11.2018**
(21) Application number: 14173012.7
(22) Date of filing: 18.06.2014
(51) Int. Cl.: B60N 2/02, B60N 2/00

(54) **Seat adjustment node in vehicle for passenger comfort optimization**
Sitzverstellungsknoten in Fahrzeug zur Passagierkomfortoptimierung
Noeud de réglage de siège dans un véhicule pour optimiser le confort des passagers

(43) Date of publication of application: 23.12.2015
(73) Proprietor: Volvo Car Corporation, 40531 Göteborg (SE)
(72) Inventor: Christensen, Claus Allan, 2300 Köpenhamn (DK); Olesen, Anna, 2000 Fredriksberg (DK); Kramer Valsted, Steffen, 2000 Frederiksberg (DK); Nolhage, Jesper, 1753 Köpenhamn V (DK); Lohse, Henrik, 3060 Espergærde (DK); Olsen, Kee, 2770 Kastrup (DK); Kyte, Erlend, 1920 Frederiksberg (DK)
(74) Representative: Valea AB

(56) References cited:
- FR-A1- 2 982 542
- US-A- 5 822 707
- US-A1- 2003 080 699
- US-A1- 2003 121 704
- US-B1- 6 393 133

## Description

### Technical field

The present invention relates generally to a seat adjustment node in a vehicle for optimizing the comfort of a passenger in the vehicle.

### Background art

In prior art it is known to adjust a vehicle seat depending on the closing of the vehicle door adjoining the seat. In document US20110285186 A1, such solution is provided wherein further the seat or seat part which adjoins the door can be reset again automatically to the initial position before the adjustment.

In certain countries as well as in the taxi industry in general it is common that a relative stranger to the driver or a passenger respectively, uses the back seat even though the front seat of the vehicle is available/free.

Prior art document US 2003/080699 A1 discloses a power actuated seat. Methods and apparatus is provided for controlling seats and for monitoring behavior of power actuated seats. According to certain embodiments, seat occupancy data, e.g. whether the seat is occupied or a weight-dependent characteristic of the occupant of the seat, to be collected by moving a part of the seat with an actuator.

Prior art document US2003/0121704 A1 discloses an arrangement for obtaining information about an occupying item of a seat. Additional sensor systems can be used to provide additional information about the occupying item, such as a weight sensing system arranged in connection with thes seat for measuring weight applied to the seat by the occupying item. A component adjustment system may be coupled to the arrangement and adjust a component operative with respect to the occupying item based in part on the information about the occupying item obtained by the arrangement.

A drawback with the known art is that it solely considers the comfort of a passenger in the front seat and does not take into consideration the comfort of a passenger in the back seat nor the optimized comfort of two passengers travelling in both the front and back seat. The driver or the passenger in the back seat has no possibilities to enhance the comfort of the passenger from their respective seat positions in the vehicle. As a result, the passenger either travels in a discomfortable way or a time-consuming seat adjustment needs to be carried out by the driver/passenger.

### Summary of invention

An object of the present invention is to enable an automatic seat adjustment in a vehicle which provides an improved comfort to the passenger which is faster, more convenient to use but also provides for an increased safety.

According to the invention a method is provided performed by a seat adjustment node in a vehicle for optimizing the comfort of a passenger in the vehicle, the method comprising:
- sensing the presence of a passenger in a front seat of the vehicle,
- determining an adapted front seat position based on the sensing of the presence of a passenger in the front seat,
- moving the front seat to or retaining in, the adapted front seat position.
- sensing the presence of a passenger in the rear seat,
- determining an adapted front seat position based on the sensing of the presence of a passenger in the rear seat,
- moving the front seat in a rearward direction to a first adapted front seat position if a passenger is sensed in the front seat, and
- moving the front seat in a forward direction to a second adapted front seat position if a passenger is not sensed in the front seat and a passenger is sensed in the rear seat.

According to one embodiment, the method, further comprising:
- sensing the position of a rear door and a front door of the vehicle,
- determining an adapted front seat position based on the sensing of the position of the rear door and the front door,
- moving or retaining the front seat to the adapted front seat position.

According to one embodiment, the method is provided, wherein:
- when no passenger is sensed in the front seat or the rear seat,
   retaining the front seat in its position if both doors are closed, wherein retaining the front seat in its position if both doors are open, wherein
   moving the front seat in a rearward direction to the first adapted front seat position if the front door is open and the back door is closed,
   moving the front seat in a forward direction to the second adapted front seat position if the rear door is open and the front door is closed.

According to one embodiment, the method further comprising:
- folding a headrest of the front seat and/or folding the front seat during movement of the front seat in a forward direction to a second adapted front seat position.

According to one embodiment, the method is provided wherein the first and/or second adapted front seat position is based on the sensed weight during sensing the presence of the passenger in the rear seat and/or front seat, wherein the first adapted front seat position becomes more retracted in a forward direction with a sensed higher weight, wherein the second adapted front seat position becomes more advanced in a forward direction with a sensed higher weight.

According to one embodiment, the method is provided previous wherein the sensing of the presence of a passenger in the front seat and/or rear seat is carried out by a passenger detection device , such as a pressure detection device, an infrared device or a seatbelt sensor device.

According to one embodiment, a seat adjustment node in a vehicle for optimizing the comfort of an occupant in the vehicle is provided, the node is arranged to
- sense the presence of a passenger in a front seat of the vehicle by a front seat sensor,
- determine an adapted front seat position based on the sensing of the presence of a passenger in the front seat, by a determination unit,
- move a front seat to the adapted front seat position by a front seat driving device
- sense the presence of a passenger in the rear seat by a rear seat sensor,
- determine an adapted front seat position based on the sensing of the presence of a passenger in the rear seat, by a determination unit,
- move the front seat in a rearward direction to a first adapted front seat position if a passenger is sensed in the front seat by a front seat driving device, and
- move the front seat in a forward direction to a second adapted front seat position if a passenger is not sensed in the front seat and a passenger is sensed in the rear seat, by a front seat driving device.

According to one embodiment, the seat adjustment node is, further being arranged to:
- sense the position of a front door and a rear door of the vehicle by a front door sensor and a rear door sensor,
- determine an adapted front seat position based on the sensing of the position of the front door and the rear door,
- move or retain the front seat to the adapted front seat position.

According to one embodiment, the seat adjustment node is provided, wherein:
- when no passenger is sensed in the front seat or the rear seat, the seat adjustment node is further arranged to:
   retain the front seat in its position if both the front door and the rear door are closed, or
   retain the front seat in its position if both the front door and the rear doors are open, or
   move the front seat in a rearward direction to the first adapted front seat position if the front door is open and the back door is closed by a front seat driving device,
   move the front seat in a forward direction to the second adapted front seat position if the rear door is open and the front door is closed by a front seat driving device.

According to one embodiment, the seat adjustment node is further being arranged to:
- fold a headrest of the front seat and/or fold the front seat during movement of the front seat in a forward direction to a second adapted front seat position by a headrest driving device and/or a front seat driving device.

According to one embodiment, a computer program is provided, comprising computer readable code means, which when run in a connected seat adjustment node in a vehicle arranged for optimizing the comfort of an occupant in the vehicle causes the seat adjustment node to perform the method according to any of the above embodiments, for example as described in[0008]-[0013].

According to one embodiment, a computer program product is provided, comprising a computer readable medium and a computer program according to the above embodiment, for example as described in [0018], wherein the computer program is stored on the computer readable medium.

According to one embodiment, a vehicle is provided comprising a seat adjustment node (100) according to any of the above embodiments, for example as described in [0014]-[0017].

### Brief description of drawings

The invention is now described, by way of example, with reference to the accompanying drawings, in which:
Fig. 1 shows a perspective view of a vehicle comprising a seat adjustment node according to the invention.
Fig. 2 is a flow chart illustrating a procedure in a seat adjusting node.
Fig. 3 is a flow chart illustrating a procedure in a seat adjusting node.
Fig. 4 illustrates example embodiments of a vehicle information node.
Fig. 5 shows an illustration of embodiments of a vehicle information node.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention.

A vehicle may comprise any type of vehicle including but not limited to a car or a commercial vehicle, truck or lorry. According to one embodiment, the vehicle extends from a rear end of the vehicle to a front end of the vehicle in a forward direction. According to one embodiment, a vehicle comprises two front seats wherein one of the front seats is a driver's seat and the second front seat is a passenger seat. According to one embodiment, the vehicle comprises at least two rear seats. According to one embodiment, the respective front seat comprises a respective rear seat. According to one embodiment, a rear seat is the seat rear or immediately rear of the front seat. According to one embodiment, a rear seat is the seat rear or immediately rear of the front seat in relation to the forward direction. According to one embodiment, the front seat is the driver's seat. According to one embodiment, the front seat is the passenger seat, arranged next to the driver's seat in a direction essentially perpendicular to the driver's seat.

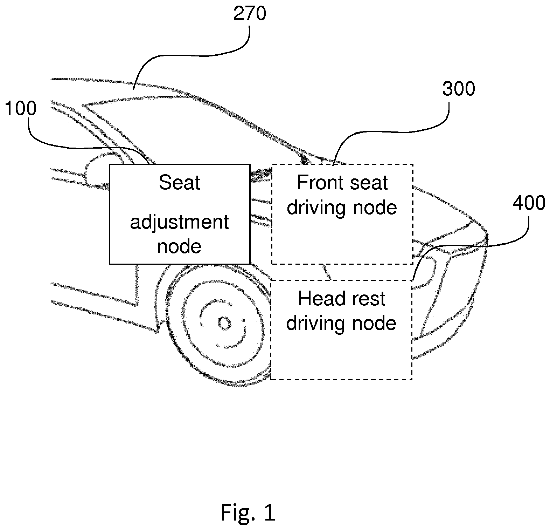

Fig.1 shows a perspective view of a vehicle 270 comprising a seat adjustment node 100 for optimizing the comfort of a passenger in the vehicle 270, wherein the vehicle information node 100 may comprise one of e.g. the following: a IHU (Infotainment Head Unit), a TEM (Telematics Module), a CEM (Central Electronic Module) or an ECU (Electronic Control Module).

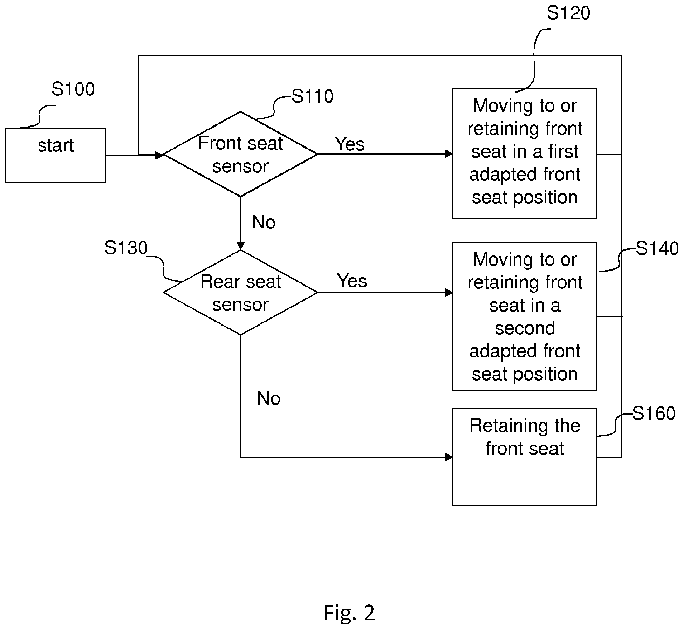

A procedure or method in a seat adjustment node 100 for optimizing the comfort of a passenger in the vehicle 270 will now be described with reference to Fig. 2. In a first step S100, the method is initiated. According to one embodiment, the procedure is initiated as a result of turning the vehicle ignition key. According to another embodiment, the procedure is initiated as a result of the driver arriving to, or in a close proximity to the vehicle. According to one embodiment, the procedure is initiated by the switching of a control switch in the vehicle 270. In a second step S110 front seat passenger presence data is received in a seat adjustment node 100, and a determination unit 160 determines if there is a passenger sitting in the front seat. In a further step S120, if the determination unit 160 determines that there is a passenger in the front seat, the determination unit determines that the front seat should be moved in a rearward direction to a first adapted front seat position. A vehicle communication unit 130 activates a front seat driving device 310 of a separate front seat driving node 300 in the vehicle. If the front seat is already in the first adapted front seat position, the determination unit determines that the front seat should be retained in this position. Retaining in this sense may be considered as simply not activating a seat driving device to move the front seat. If the determination unit determines that no passenger is present in the front seat, a sensing of the presence of a passenger in the rear seat is carried out. In a step S130, the determination unit 160 determines whether there is a passenger present in the rear seat. In a further step S140, if the determination unit determines that there is a passenger present in the rear seat, the determination unit determines that the front seat should be moved in a forward direction to a second adapted front seat position.

Front and rear passenger presence data may for instance be received from sensor units 120:A, 120:B, either by wire, or wirelessly, via for example CAN-bus (Controller Area Network) WiFi/Wireless Local Area Network (WLAN), Bluetooth, Radio Frequency Identification (RFID), ZigBee not limiting to other wireless communication means suitable for short or media range wireless communication. According to one embodiment, the seat adjustment node 100 receives front and rear passenger presence data signal via sensor units 120 sensing the presence of a passenger in the front seat and rear seat respectively. According to one embodiment, the sensor unit 120:A, 120:B may be comprised by a pressure detection device arranged in the seat area of the respective rear seat and front seat. According to one embodiment, the pressure detection device is able to detect the weight of a passenger or object arranged in the rear seat and front seat respectively. According to one embodiment, a camera node or image acquisition node may enable the acquisition of an image or images of a passenger in the rear and front seat respectively. Further, via for instance an image processing or recognition step in the camera node or another node, the size and/or weight of the passenger may be identified, whereby the front and rear passenger presence data may be provided and further transmitted to the seat adjustment node 100. According to one embodiment, the image processing step may comprise comparison of the image with images of passengers of known identity and/or weight, and/or height, and/or other personal preferences. According to one embodiment the sensor units 120:A, 120:B may be comprised by an infrared sensor. According to one embodiment, the seat adjustment node 100 requests first and second passenger presence data from the sensor units 120, and/or other nodes, such as a camera node, and/or a passenger or driver of the vehicle. The first and second passenger presence data may further be received from a keyboard device, wherein the keyboard device is connected to seat adjustment node 100 by known connection means, comprising connection by wire or wirelessly.

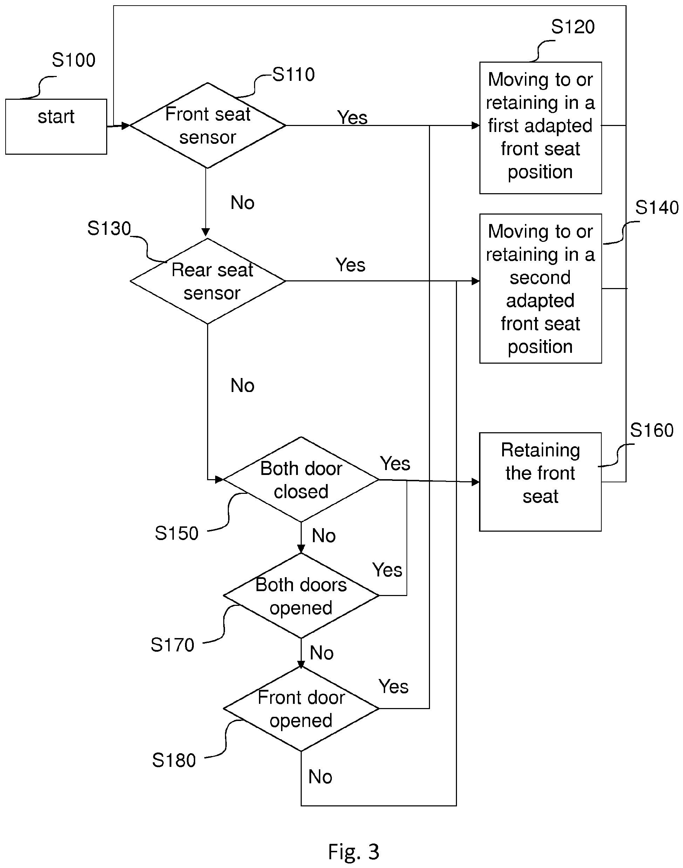

A further procedure or method in a seat adjustment node 100 for optimizing the comfort of a passenger in the vehicle 270 will now be described with reference to Fig. 3. This is a procedure that may have predictive capabilities and that takes into consideration whether a passenger is likely to enter the front or rear seat and provides the possibility to adjust the front seat even before the passenger is seated in either the rear or the front seat. The initial part of the procedure of Fig. 3 corresponds to the procedure of Fig. 2, i.e. comprising the steps S100, S110, S120, S130, S140. In a yet further step, the seat adjustment node 100 receives rear door position data and front door position data. The rear door position data and front door position data may be received from respectively a rear door position sensor 120:C and front door position sensor 120:D which provides information concerning at least whether the respective door is in a closed or open state. In a step S150, which is initiated if there is no passenger detected in the seats according to S110 and S130, the determination unit 160 determines whether both the front and rear doors, i.e. both doors, are in a closed state respectively. If the determination unit 160 determines that both doors are in a closed state, the front seat is retained in its position, i.e. no activation of the moving of the front seat is initiated, step S160. If it is determined that both the front and rear doors are not closed, it is determined whether both the front and rear doors are instead in an open state, in step S170. If the determination unit 160 determines that the front and rear door is in an open state, the front seat is retained in its position, i.e. no activation of the moving of the front seat is initiated, step S160. If it is determined that at only one door is open, in step 170, it is determined whether the front door is open in step S180. If the determination unit 160 determines that the front door is open in S180, the determination unit controls the front seat by moving the front seat in a rearward direction to the first adapted front seat position, or, if the front seat is already in the first adapted front seat position, retaining the front seat in said first adapted front seat position, S120. If it is determined in step S180 that the front door is closed, i.e. not open, the determination unit 160 hence determines that the rear door is open. As a result, the determination unit 160 controls the front seat by moving the front seat in a forward direction to the second adapted front seat position, or, if the front seat is already in the second adapted front seat position, retaining the front seat in said second adapted front seat position, S140.

According to one embodiment, the headrest of the front seat is folded before, simultaneously during, or after the movement of the front seat in a forward direction to a second adapted front seat position. According to one embodiment, the front seat is folded before, simultaneously during, or after the movement of the front seat in a forward direction to a second adapted front seat position. A front seat driving device is arranged to carry out the moving of the front seat. According to one embodiment, the front seat driving device is arranged to carry out the folding of the front seat. According to one embodiment the front seat driving device comprises a motor arranged to drive the front seat in a forward and backward direction. According to one embodiment, the front seat driving device comprises a motor arranged to fold and unfold the front seat. A headrest driving device 410 is arranged to fold and unfold the headrest.

According to one embodiment, a notification could appear in the CSD centre stack display the seats are moving, to alert the driver and/or passengers in the vehicle.

According to one embodiment, the first and second adapted front seat positions are simply pre-defined positions stored in a database 150 of the seat adjustment node 100, wherein the determination of the adapted first and second front seat positions are a matter of updating the setting of the front seat position, and by activating the front seat drive mechanism, to move the front seat to said position. According to one embodiment, the first and second adapted front seat positions depend respectively on passenger parameters currently using the front and rear seats, such as height, weight or pre-defined preferences of the passenger. According to one embodiment, the first and second adapted front seat positions is based on an allowed foremost position of the front seat whereby the sight of the driver is not obstructed whereby a safe driving can be carried out.

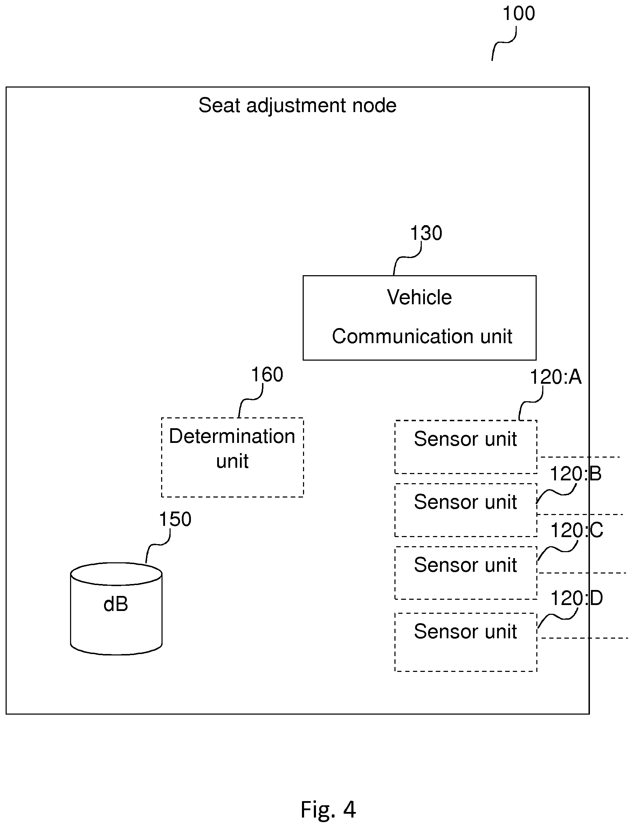

Fig. 4 discloses a seat adjustment node 100 for optimizing the comfort of a passenger in the vehicle 270. The node 100 is arranged to receive first and second passenger presence data concerning the presence in a front and rear seat of the vehicle 270 respectively, via a vehicle communication unit 130. The node 100 is further arranged to receive rear door position data and front door position data concerning at least the opened or closed state of the rear door and front door respectively via the vehicle communication unit 130. A determination unit 160 is arranged to request the activation of a front seat drive device via its front seat drive node 300 and the vehicle communication unit 130, based on the first and second passenger presence data and the rear door and front door position data. The same determination unit 160 is arranged to request the activation of a head rest drive device via its head rest drive node 400 and the vehicle communication unit 130, based on the first and second passenger presence data and the rear door and front door position data. The determination unit 160 is arranged to determine an adapted front seat position based on the sensing of the presence of a passenger in the front seat or the rear seat. The sensor unit 120:A, 120:B are arranged to sense the presence of a passenger in the front seat. In an embodiment sensor unit 120:A and sensor unit 120:Bis a pressure detection device (120), an infrared device or a seatbelt sensor device. According to one embodiment the sensors 120:C, 120D are arranged to sense the sense the position of the front door and rear door of the vehicle 270 respectively. The database 150 may be arranged for storage of sensor data, data of individuals such as weight and length, historical data, statistical data, configuration data, pre configuration data, not limiting to other type of data. The database 150 may be based on a flash type of memory, disk drive of memory, virtual memory provided by a network access, not limiting to other types of storages.

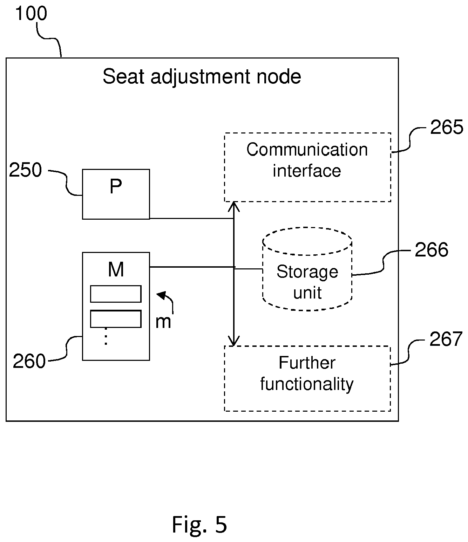

Fig. 5 shows an illustration of embodiments of a seat adjustment node 100. The seat adjustment node 100 may be implemented, by means of program modules of a respective computer program comprising code means which, when run by a processing unit 250 causes the seat adjustment node100 to perform the above-described actions. The processing unit 250 may comprise a single Central Processing Unit (CPU), or could comprise two or more processing units. For example, the processing unit 250 may include general purpose microprocessors, instruction set processors and/or related chips sets and/or special purpose microprocessors such as Application Specific Integrated Circuits (ASICs). The processing unit 250 may also comprise a storage for caching purposes.

Each computer program may be carried by a computer program product 260 in the vehicle information node 100, shown in Fig. 1, 2, 3, 4, et al, in the form of a memory having a computer readable medium and being connected to the processing unit 250. The computer program product 260 or memory thus comprises a computer readable medium on which the computer program is stored e.g. in the form of computer program modules "m". For example, the memory 260 may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the vehicle information node 100.

The seat adjustment node 100 may further comprise a communication interface 265. The communication interface 265 may be arranged to communicate with for example the sensor unit 120, front seat driving node 300, head rest driving node 400. In an embodiment the communication interface 265 may comprise chip set adopted for communication via CAN bus (Controller Area Network) or communication adopted to ISO 11898. Other examples of standards which may be supported by the communication interface 265are: ZigBee, Bluetooth, RFID (Radio frequency identification), USB (Universal serial bus), or IEEE 802.11 (Institute of Electrical and Electronics Engineers), including but not limited to 802.11a/b/n or other similar forthcoming standards. The communication interface 265 may comprise an antenna. The communication interface 265 may be connectable to an external antenna. The seat adjustment node 100 may further comprise one or more storage units 266 and further functionality 267 useful for the vehicle information node 100 to serve its purpose as seat adjustment node, such as power supply, internal communications bus, internal cooling, database engine, operating system, not limiting to other functionalities.

A preferred embodiment of a seat adjustment node according to the invention has been described. However, the person skilled in the art realizes that this can be varied within the scope of the appended claims without departing from the inventive idea.

## Claims

1. Method performed by a seat adjustment node (100) in a vehicle (270) for optimizing the comfort of a passenger in the vehicle (270), the method comprising:
- sensing the presence of a passenger in a front seat of the vehicle (270),
- determining an adapted front seat position based on the sensing of the presence of a passenger in the front seat,
- moving the front seat to or retaining in, the adapted front seat position,
- sensing the presence of a passenger in the rear seat,
- determining an adapted front seat position based on the sensing of the presence of a passenger in the rear seat,
- moving the front seat in a rearward direction to a first adapted front seat position if a passenger is sensed in the front seat, and
- moving the front seat in a forward direction to a second adapted front seat position if a passenger is not sensed in the front seat and a passenger is sensed in the rear seat.

2. The method according to claim 1, further comprising:
- sensing the position of a rear door and a front door of the vehicle (270),
- determining an adapted front seat position based on the sensing of the position of the rear door and the front door,
- moving or retaining the front seat to the adapted front seat position.

3. The method according to claim 2, wherein:
- when no passenger is sensed in the front seat or the rear seat,
retaining the front seat in its position if both doors are closed, wherein
retaining the front seat in its position if both doors are open, wherein moving the front seat in a rearward direction to the first adapted front seat position if the front door is open and the back door is closed,
moving the front seat in a forward direction to the second adapted front seat position if the rear door is open and the front door is closed.

4. The method according to any of the previous claims, further comprising:
- folding a headrest of the front seat and/or folding the front seat during movement of the front seat in a forward direction to a second adapted front seat position.

5. The method according to any of the previous claims, wherein the first and/or second adapted front seat position is based on the sensed weight during sensing the presence of the passenger in the rear seat and/or front seat, wherein the first adapted front seat position becomes more retracted in a forward direction with a sensed higher weight, wherein the second adapted front seat position becomes more advanced in a forward direction with a sensed higher weight.

6. The method according to any of the previous claims, wherein the sensing of the presence of a passenger in the front seat and/or rear seat is carried out by a passenger detection device (120), such as a pressure detection device, an infrared device or a seatbelt sensor device.

7. A seat adjustment node (100) in a vehicle (270) for optimizing the comfort of an occupant in the vehicle (270), the node (100) is arranged to
- sense the presence of a passenger in a front seat of the vehicle (270) by a front seat sensor (120:A, 120:B),
- determine an adapted front seat position based on the sensing of the presence of a passenger in the front seat, by a determination unit (160),
- move a front seat to the adapted front seat position by a front seat driving device (310)
- sense the presence of a passenger in the rear seat by a rear seat sensor (120:A, 120:B),
- determine an adapted front seat position based on the sensing of the presence of a passenger in the rear seat, by a determination unit (160),
- move the front seat in a rearward direction to a first adapted front seat position if a passenger is sensed in the front seat by a front seat driving device (310), and
- move the front seat in a forward direction to a second adapted front seat position if a passenger is not sensed in the front seat and a passenger is sensed in the rear seat, by a front seat driving device (310).

8. The seat adjustment node according to claim 7, further being arranged to:
- sense the position of a front door and a rear door of the vehicle by a front door sensor (120:C) and a rear door sensor (120:D),
- determine an adapted front seat position based on the sensing of the position of the front door and the rear door,
- move or retain the front seat to the adapted front seat position.

9. The seat adjustment node according to claim 8, wherein:
- when no passenger is sensed in the front seat or the rear seat, the seat adjustment node (100) is further arranged to:
retain the front seat in its position if both the front door and the rear door are closed, or
retain the front seat in its position if both the front door and the rear door are open, or
move the front seat in a rearward direction to the first adapted front seat position if the front door is open and the back door is closed by a front seat driving device,
move the front seat in a forward direction to the second adapted front seat position if the rear door is open and the front door is closed by a front seat driving device.

10. The seat adjustment node according to any of the previous claims 7-9, further being arranged to:
- fold a headrest of the front seat and/or fold the front seat during movement of the front seat in a forward direction to a second adapted front seat position by a headrest driving device (410) and/or a front seat driving device (310).

11. A computer program, comprising computer readable code means, which when run in a connected seat adjustment node (100) in a vehicle arranged for optimizing the comfort of an occupant in the vehicle (270) causes the seat adjustment node (100) to perform the method according to any of the claims 1-6.

12. A computer program product, comprising a computer readable medium and a computer program according to claim 11, wherein the computer program is stored on the computer readable medium.

13. Vehicle (270) comprising a seat adjustment node (100) according to any of the previous claims 7-10.

## Patentansprüche

1. Verfahren, das durch einen Sitzverstellungsknoten (100) in einem Fahrzeug (270) zum Optimieren des Komforts eines Fahrgasts im Fahrzeug (270) durchgeführt wird, wobei das Verfahren Folgendes umfasst:
- Erfassen der Anwesenheit eines Fahrgasts auf einem Vordersitz des Fahrzeugs (270),
- Ermitteln einer angepassten Vordersitzposition basierend auf dem Erfassen der Anwesenheit eines Fahrgasts auf dem Vordersitz,
- Verschieben des Vordersitzes in die angepasste Vordersitzposition oder Halten des Vordersitzes in der angepassten Vordersitzposition,
- Erfassen der Anwesenheit eines Fahrgasts auf dem Rücksitz,
- Ermitteln einer angepassten Vordersitzposition basierend auf dem Erfassen der Anwesenheit eines Fahrgasts auf dem Rücksitz,
- Verschieben des Vordersitzes in einer Rückwärtsrichtung in eine erste angepasste Vordersitzposition, wenn ein Fahrgast auf dem Vordersitz erfasst wird, und
- Verschieben des Vordersitzes in einer Vorwärtsrichtung in eine zweite angepasste Vordersitzposition, wenn kein Fahrgast auf dem Vordersitz erfasst wird und ein Fahrgast auf dem Rücksitz erfasst wird.

2. Verfahren nach Anspruch 1, das ferner Folgendes umfasst:
- Erfassen der Position einer Hintertür und einer Vordertür des Fahrzeugs (270),
- Ermitteln einer angepassten Vordersitzposition basierend auf dem Erfassen der Position der Hintertür und der Vordertür,
- Verschieben des Vordersitzes in die angepasste Vordersitzposition oder Halten des Vordersitzes in der angepassten Vordersitzposition.

3. Verfahren nach Anspruch 2, wobei:
- wenn kein Fahrgast auf dem Vordersitz oder dem Rücksitz erfasst wird,
Halten des Vordersitzes in seiner Position, wenn beide Türen geschlossen sind, wobei
Halten des Vordersitzes in seiner Position, wenn beide Türen geöffnet sind, wobei
Verschieben des Vordersitzes in einer Rückwärtsrichtung in die erste angepasste Vordersitzposition, wenn die Vordertür geöffnet und die Hintertür geschlossen ist,
Verschieben des Vordersitzes in einer Vorwärtsrichtung in die zweite angepasste Vordersitzposition, wenn die Hintertür geöffnet und die Vordertür geschlossen ist.

4. Verfahren nach einem der vorherigen Ansprüche, das ferner Folgendes umfasst:
- Klappen einer Kopfstütze des Vordersitzes und/oder Klappen des Vordersitzes während des Verschiebens des Vordersitzes in einer Vorwärtsrichtung in eine zweite angepasste Vordersitzposition.

5. Verfahren nach einem der vorherigen Ansprüche, wobei die erste und/oder die zweite angepasste Vordersitzposition auf dem erfassten Gewicht während des Erfassens der Anwesenheit des Fahrgasts auf dem Rücksitz und/oder dem Vordersitz basiert, wobei die erste angepasste Vordersitzposition bei einem erfassten größeren Gewicht in einer Vorwärtsrichtung weiter zurückgeschoben wird, wobei die zweite angepasste Vordersitzposition bei einem erfassten größeren Gewicht in einer Vorwärtsrichtung weiter herausgeschoben wird.

6. Verfahren nach einem der vorherigen Ansprüche, wobei das Erfassen der Anwesenheit eines Fahrgasts auf dem Vordersitz und/oder dem Rücksitz durch eine Fahrgastdetektionseinrichtung (120), etwa eine Druckdetektionseinrichtung, eine Infraroteinrichtung oder eine Sicherheitsgurtsensoreinrichtung ausgeführt wird.

7. Sitzverstellungsknoten (100) in einem Fahrzeug (270) zum Optimieren des Komforts eines Insassen im Fahrzeug (270), wobei der Knoten (100) für Folgendes eingerichtet ist:
- Erfassen der Anwesenheit eines Fahrgasts auf einem Vordersitz des Fahrzeugs (270) durch einen Vordersitzsensor (120:A, 120:B),
- Ermitteln einer angepassten Vordersitzposition basierend auf dem Erfassen der Anwesenheit eines Fahrgasts auf dem Vordersitz durch eine Ermittlungseinheit (160),
- Verschieben eines Vordersitzes in die angepasste Vordersitzposition durch eine Vordersitzantriebseinrichtung (310),
- Erfassen der Anwesenheit eines Fahrgasts auf dem Rücksitz durch einen Rücksitzsensor (120:A, 120:B),
- Ermitteln einer angepassten Vordersitzposition basierend auf dem Erfassen der Anwesenheit eines Fahrgasts auf dem Rücksitz durch eine Ermittlungseinheit (160),
- Verschieben des Vordersitzes in einer Rückwärtsrichtung in eine erste angepasste Vordersitzposition, wenn ein Fahrgast auf dem Vordersitz erfasst wird, durch eine Vordersitzantriebseinrichtung (310) und
- Verschieben des Vordersitzes in einer Vorwärtsrichtung in eine zweite angepasste Vordersitzposition, wenn kein Fahrgast auf dem Vordersitz erfasst wird und ein Fahrgast auf dem Rücksitz erfasst wird, durch eine Vordersitzantriebseinrichtung (310).

8. Sitzverstellungsknoten nach Anspruch 7, der ferner für Folgendes eingerichtet ist:
- Erfassen der Position einer Vordertür und einer Hintertür des Fahrzeugs durch einen Vordertürsensor (120:C) und einen Hintertürsensor (120:D),
- Ermitteln einer angepassten Vordersitzposition basierend auf dem Erfassen der Position der Vordertür und der Hintertür,
- Verschieben des Vordersitzes in die angepasste Vordersitzposition oder Halten des Vordersitzes in der angepassten Vordersitzposition.

9. Sitzverstellungsknoten nach Anspruch 8, wobei:
- wenn kein Fahrgast auf dem Vordersitz oder dem Rücksitz erfasst wird, der Sitzverstellungsknoten (100) ferner für Folgendes eingerichtet ist:
Halten des Vordersitzes in seiner Position, wenn sowohl die Vordertür als auch die Hintertür geschlossen sind, oder
Halten des Vordersitzes in seiner Position, wenn sowohl die Vordertür als auch die Hintertür geöffnet sind, oder
Verschieben des Vordersitzes in einer Rückwärtsrichtung in die erste angepasste Vordersitzposition, wenn die Vordertür geöffnet und die Hintertür geschlossen ist, durch eine Vordersitzantriebseinrichtung,
Verschieben des Vordersitzes in einer Vorwärtsrichtung in die zweite angepasste Vordersitzposition, wenn die Hintertür geöffnet und die Vordertür geschlossen ist, durch eine Vordersitzantriebseinrichtung.

10. Sitzverstellungsknoten nach einem der vorherigen Ansprüche 7-9, der ferner für Folgendes eingerichtet ist:
- Klappen einer Kopfstütze des Vordersitzes und/oder Klappen des Vordersitzes während des Verschiebens des Vordersitzes in einer Vorwärtsrichtung in eine zweite angepasste Vordersitzposition durch eine Kopfstützenantriebseinrichtung (410) und/oder eine Vordersitzantriebseinrichtung (310).

11. Computerprogramm, das computerlesbare Codemittel umfasst und, wenn es in einem verbundenen Sitzverstellungsknoten (100) in einem Fahrzeug, der zum Optimieren des Komforts eines Insassen im Fahrzeug (270) eingerichtet ist, laufen gelassen wird, bewirkt, dass der Sitzverstellungsknoten (100) das Verfahren nach einem der Ansprüche 1-6 durchführt.

12. Computerprogrammprodukt, das ein computerlesbares Medium und ein Computerprogramm nach Anspruch 11 umfasst, wobei das Computerprogramm auf dem computerlesbaren Medium gespeichert ist.

13. Fahrzeug (270), das einen Sitzverstellungsknoten (100) nach einem der vorherigen Ansprüche 7-10 umfasst.

## Revendications

1. Procédé réalisé par un noeud d'ajustement de siège (100) dans un véhicule (270) dans le but d'optimiser le confort d'un passager dans le véhicule (270), le procédé comprenant :
- la détection de la présence d'un passager sur le siège avant du véhicule (270),
- la détermination d'une position de siège avant adaptée sur la base de la détection de la présence d'un passager sur le siège avant,
- le déplacement du siège avant vers la position de siège avant adaptée, ou bien la retenue à celle-ci,
- la détection de la présence d'un passager sur le siège arrière,
- la détermination d'une position du siège avant adaptée sur la base de la détection de la présence d'un passager sur le siège arrière,
- le déplacement du siège avant dans la direction vers l'arrière jusqu'à une première position de siège avant adaptée si un passager est détecté sur le siège avant, et
- le déplacement du siège avant dans la direction vers l'avant jusqu'à une seconde position de siège avant adaptée si aucun passager n'est détecté sur le siège avant et qu'un passager est détecté sur le siège arrière.

2. Procédé selon la revendication 1, comprenant en outre :
- la détection de la position d'une portière arrière et d'une portière avant du véhicule (270),
- la détermination d'une position de siège avant adaptée sur la base de la détection de la position de la portière arrière et de la portière avant,
- le déplacement du siège avant vers la position de siège avant adaptée ou la retenue à celle-ci.

3. Procédé selon la revendication 2, dans lequel :
- lorsqu'aucun passager n'est détecté sur le siège avant ou sur le siège arrière,
la retenue du siège avant dans sa position si les deux portières sont fermées, où
la retenue du siège avant dans sa position si les deux portières sont ouvertes, où
le déplacement du siège avant dans la direction vers l'arrière jusqu'à la première position de siège avant adaptée si la portière avant et ouverte et que la portière arrière est fermée,
le déplacement du siège avant dans la direction vers l'avant jusqu'à la seconde position de siège avant adaptée si la portière arrière est ouverte et que la portière avant est fermée.

4. Procédé selon l'une quelconque des revendications précédentes, comprenant en outre :
- le repli de l'appui-tête du siège avant et/ou le repli du siège avant pendant le mouvement du siège avant dans la direction vers l'avant jusqu'à la seconde position de siège avant adaptée.

5. Procédé selon l'une quelconque des revendications précédentes, dans lequel la première et/ou la seconde position de siège avant adaptée est fondée sur le poids détecté pendant la détection de la présence du passager sur le siège arrière et/ou le siège avant, la première position de siège avant adaptée se rétractant dans la direction vers l'avant à mesure que le poids détecté augmente, la seconde position de siège avant adaptée avançant dans la direction vers l'avant à mesure que le poids détecté augmente.

6. Procédé selon l'une quelconque des revendications précédentes, dans lequel la détection de la présence d'un passager sur le siège avant et/ou le siège arrière est exécutée par un dispositif de détection de passager (120) tel qu'un dispositif de détection de pression, un dispositif infrarouge ou un dispositif de capteur de ceinture de sécurité.

7. Noeud d'ajustement de siège (100) dans un véhicule (270) dans le but d'optimiser le confort d'un occupant dans le véhicule (270), le noeud (100) étant agencé pour :
- détecter la présence d'un passager sur le siège avant du véhicule (270), grâce à un capteur de siège avant (120 : A, 120 : B),
- déterminer une position de siège avant adaptée sur la base de la détection de la présence d'un passager sur le siège avant, grâce à une unité de détermination (160),
- déplacer le siège avant vers la position de siège avant adaptée, grâce à un dispositif d'entraînement de siège avant (310),
- détecter la présence d'un passager sur le siège arrière, grâce à un capteur de siège arrière (120 : A, 120 : B),
- déterminer une position du siège avant adaptée sur la base de la détection de la présence d'un passager sur le siège arrière, grâce à une unité de détermination (160)
- déplacer le siège avant dans la direction vers l'arrière jusqu'à une première position de siège avant adaptée si un passager est détecté sur le siège avant, grâce à un dispositif d'entraînement de siège avant (310), et
- déplacer le siège avant dans la direction vers l'avant jusqu'à une seconde position de siège avant adaptée si aucun passager n'est détecté sur le siège avant et qu'un passager est détecté sur le siège arrière, grâce à un dispositif d'entraînement de siège avant (310).

8. Noeud d'ajustement de siège selon la revendication 7, agencé en outre pour :
- détecter la position d'une portière avant et d'une portière arrière du véhicule, grâce à un capteur de portière avant (120 : C) et un capteur de portière arrière (120 : D),
- déterminer une position de siège avant adaptée sur la base de la détection de la position de la portière avant et de la portière arrière,
- déplacer le siège avant vers la position de siège avant adaptée ou le retenir à celle-ci.

9. Noeud d'ajustement de siège selon la revendication 8, dans lequel :
- lorsqu'aucun passager n'est détecté sur le siège avant ou sur le siège arrière, le noeud d'ajustement de siège (100) est en outre agencé pour :
retenir le siège avant dans sa position si à la fois la portière avant et la portière arrière sont fermées, ou
retenir le siège avant dans sa position si à la fois la portière avant et la portière arrière sont ouvertes, ou
déplacer le siège avant dans la direction vers l'arrière jusqu'à la première position de siège avant adaptée si la portière avant est ouverte et que la portière arrière est fermée, grâce à un dispositif d'entraînement de siège avant,
déplacer le siège avant dans la direction vers l'avant jusqu'à la seconde position de siège avant adaptée si la portière arrière est ouverte et que la portière avant est fermée, grâce à un dispositif d'entraînement de siège avant.

10. Noeud d'ajustement de siège selon l'une quelconque des revendications 7 à 9 précédentes, agencé en outre pour :
- replier un appui-tête du siège avant et/ou replier le siège avant pendant le mouvement du siège avant dans la direction vers l'avant jusqu'à la seconde position de siège avant adaptée, grâce à un dispositif d'entraînement d'appui-tête (410) et/ou grâce à un dispositif d'entraînement de siège avant (310).

11. Programme informatique, comprenant un moyen de code pouvant être lu par ordinateur qui, lorsqu'il est exécuté dans un noeud d'ajustement de siège (100) dans un véhicule agencé pour optimiser le confort d'un occupant dans le véhicule (270), amène le noeud d'ajustement de siège (100) à réaliser le procédé conforme à l'une quelconque des revendications 1 à 6.

12. Produit de programme informatique, comprenant un support pouvant être lu par ordinateur et un programme informatique conforme à la revendication 11, dans lequel le programme informatique est stocké sur le support pouvant être lu par ordinateur.

13. Véhicule (270) comprenant un noeud d'ajustement de siège (100) conforme à l'une quelconque des revendications 7 à 10 précédentes.
